# EUROPÄISCHE PATENTSCHRIFT

(11) **EP 3 072 080 B1**
(45) Veröffentlichungstag und Bekanntmachung des Hinweises auf die Patenterteilung: **26.09.2018**
(21) Anmeldenummer: 15705275.4
(22) Anmeldetag: 13.02.2015
(51) Int. Cl.: G06F 21/57

(54) **VERFAHREN UND VORRICHTUNG ZUM MANIPULATIONSSCHUTZ EINER RECHENEINRICHTUNG**
METHOD AND DEVICE FOR PROTECTING A COMPUTING APPARATUS AGAINST MANIPULATION
PROCÉDÉ ET DISPOSITIF DE PROTECTION D'UN DISPOSITIF DE CALCUL CONTRE LES MANIPULATIONS

(30) Priorität: 31.03.2014 DE 102014206006
(43) Veröffentlichungstag der Anmeldung: 28.09.2016
(73) Patentinhaber: Siemens Aktiengesellschaft, 80333 München (DE)
(72) Erfinder: FALK, Rainer, 85586 Poing (DE)
(86) Internationale Anmeldenummer: PCT/EP2015/053044
(87) Internationale Veröffentlichungsnummer: WO 2015/149979

(56) Entgegenhaltungen:
- WO-A1-2011/042892
- WO-A1-2012/119218
- US-B1- 7 043 581

## Beschreibung

Die vorliegende Erfindung betrifft ein Verfahren zum Manipulationsschutz einer Recheneinrichtung. Des Weiteren betrifft die vorliegende Erfindung ein Computerprogrammprodukt und eine Vorrichtung zum Manipulationsschutz einer Recheneinrichtung.

Die Integrität von Recheneinrichtungen, wie industriellen Steuerungssystemen, ist eine wesentliche Zielsetzung, um deren korrekte Funktionalität zu gewährleisten. Bei vernetzten Steuerungssystemen kann beispielsweise im laufenden Betrieb über die Datenverbindung, z.B. Ethernet, eine Manipulation des Steuerungssystems erfolgen. Für solche unzulässigen Manipulationen können zum Beispiel Sicherheitslücken in der Implementierung von einem Angreifer ausgenutzt werden.

Es besteht daher ein Bedarf, selbst bei einem erfolgreichen Angriff gegen die ausgeführte Software eines Steuerungssystems oder Steuerungsgeräts die durch die Schadsoftware bzw. manipulierte Software durchführbaren Manipulationen zu beschränken.

Zum Schutz vor Angriffen werden herkömmlicherweise Schutzmaßnahmen, wie Patchen zum Schließen von Lücken, Virenscanner oder Application Whitelisting realisiert. Trotzdem kann in der Regel nicht vollständig ausgeschlossen werden, dass es zu erfolgreichen Angriffen kommt.

Aus dem Dokument WO 2012/119218 A ist bekannt, ein Linux Kernel Module zur Integritätsüberwachung zu verwenden. Des Weiteren sind so genannte Trusted Platform Modules (TPM-Module) bekannt, die den Zugriff auf einen kryptographischen Schlüssel nur freigeben, wenn ein PCR-Register (PCR; Platform Configuration Register) des TPM-Moduls einen vorgegebenen Wert enthält. Der Wert des PCR-Registers wird durch ein Reset-Signal zurückgesetzt. Im laufenden Betrieb und auch beim Hochfahren der Software kann ein Messwert ergänzt werden, zum Beispiel ein Hashwert eines Software-Moduls. Der neue PCR-Wert ergibt sich als Hashwert des aktuellen PCR-Werts und des bereitgestellten Messwerts. Dadurch ist ein Aufruf einer solchen Funktion nur ermöglicht, wenn eine bestimmte Software-Konfiguration vorliegt (als Folge des Messwerts zur Aktualisierung des PCR-Registers), aus der sich der erwartete PCR-Wert ergibt. Damit lässt sich die Integrität des Boot-Vorgangs verifizieren, da nur bei einem nicht manipulierten Boot-Vorgang die identische Folge von PCR-Messwerten vorliegt.

Allerdings ist hierzu eine aufwändige kryptographische Berechnung erforderlich. Auch betrifft eine Beschränkung der unterschiedlichen PCR-Werte nur eine Funktion des TPM-Moduls selbst. Eine Funktion der Hauptprozessoreinheit (Haupt-CPU) oder des darauf ausgeführten Betriebssystems wird jedoch hierdurch nicht beschränkt.

US 7 043 581 B1 beschreibt ein Verfahren und ein System zum Steuern eines Zugriffs auf ausgewählte Ressourcen in einem Computersystem. Das Verfahren weist ein Entriegeln einer Sicherheitshardware, ein Zugreifen auf eine erste Vorrichtung, das Verriegeln der Sicherheitshardware und das Aufrufen einer System-Management-Mode-(SMM)-Ausstiegsroutine auf.

WO 2012/119218 A1 beschreibt ein Verfahren und ein System für eine dynamische Plattformsicherheit in einem Gerätbetriebssystem.

Des Weiteren ist allgemein eine Rechteverwaltung auf IT-Systemen bekannt, bei der Nutzer (menschliche Nutzer oder Systemnutzer) eine Funktion nur aufrufen können, soweit eine Berechtigung (Zugriffsrecht) vorliegt. Auf üblichen Systemen ist ein Hauptnutzer (Root, Administrator) vorgesehen, der über beliebige, d.h. alle Rechte verfügt. Dies kann so realisiert sein, dass für einen solchen Hauptnutzer eine Berechtigungsprüfung durch das System nicht erfolgt. Ferner sind auch so genannte Mandatory Access Control-Systeme bekannt, bei denen Berechtigungen fest durch Attribute oder Merkmale der Nutzer und des zugegriffenen Objekts bestimmt werden, zum Beispiel abhängig von einer vorbestimmten Sicherheitsstufe. Allerdings sind solche Systeme sehr aufwändig zu administrieren. Ferner führen die zusätzlichen Prüfungen nachteiligerweise zu Verzögerungen.

Weiter ist allgemein eine von einem Zustand abhängige Zustandskontrolle bekannt (State-Based Access Control). Dabei ist es vom aktuellen Systemzustand abhängig, ob ein Zugriff zulässig oder unzulässig ist. Ferner ist bei bezüglich funktionaler Sicherheit (Safety) kritischen Systemen eine Versiegelung von Konfigurationseinstellungen bekannt. Dabei kann ein menschlicher Nutzer eine von ihm über eine Service-Schnittstelle angegebene Sicherheitskonfiguration versiegeln. Eine versiegelte Safety-Konfiguration kann über die Service-Schnittstelle nicht verändert werden, sondern nur komplett gelöscht werden.

Vor diesem Hintergrund besteht eine Aufgabe der vorliegenden Erfindung darin, den Manipulationsschutz einer Recheneinrichtung zu verbessern.

Demgemäß wird ein Verfahren zum Manipulationsschutz einer Recheneinrichtung vorgeschlagen, welche eine Vielzahl N, mit N ≥ 2, von zur Ausführung einer Software eingerichteten Komponenten mit zugeordneten Zugriffsrechten umfasst. Das Verfahren umfasst die Schritte: Entziehen einer Anzahl M, mit 1 ≤ M < N, der Zugriffsrechte auf die Komponenten während eines Startvorgangs der Recheneinrichtung, und Festlegen einer während der Ausführung der Software unveränderbaren Untermenge X, mit X = N - M, der Zugriffsrechte auf die Komponenten basierend auf den entzogenen Zugriffsrechten.

Ein einer Komponente zugeordnetes Zugriffsrecht gibt die Berechtigung oder Erlaubnis an, auf die Komponente zuzugreifen. Fehlt hingegen das der Komponente zugeordnete Zugriffsrecht, so kann auf die Komponente nicht zugegriffen werden. Insbesondere bestimmen die Zugriffsrechte, d.h. die Berechtigungen, auf die diesen Zugriffsrechten zugeordneten Komponenten zuzugreifen, die Konfigurationseinstellung der Recheneinrichtung.

Während des Startvorgangs der Recheneinheit wird also eine Anzahl M der Zugriffsrechte entzogen und damit die Untermenge X (X = N - M) der Zugriffsrechte auf die Komponenten während der Ausführung der Software festgelegt. Es erfolgt damit während des Startvorgangs ein Versiegeln der Konfigurationseinstellung. Danach ist die Konfigurationseinstellung bis zum nächsten Systemstart oder Reset nicht mehr durch ausgeführte Software änderbar.

Hierdurch wird der Integritätsschutz für die Recheneinrichtung verbessert, da auch bei einem erfolgreichen Angriff die durch die manipulierte Software durchführbaren Manipulationen beschränkt sind.

Das folgende Beispiel, bei welchem ein Steuerungsgerät (Embedded System) als Recheneinrichtung eine Steuerungssoftware auf einem Mikrocontroller (CPU) ausführt, soll die vorliegende Erfindung illustrieren. Während des Startvorgangs (Boot-Vorgang) werden umfangreiche Berechtigungen (Zugriffsrechte) durch die ausgeführte Software benötigt, um Komponenten, wie beispielsweise Hardware-Baugruppen, zu konfigurieren oder um Software-Komponenten zu starten und zu konfigurieren. Diese Funktionen können durch so genannte Start-Skripte realisiert werden, die als Benutzer Administrator oder Root (d.h. als Nutzer mit allen Berechtigungen) ausgeführt werden.

Durch das vorgeschlagene Verfahren zum Manipulationsschutz entzieht sich der Benutzer Root nach Abschluss der Konfiguration selbst Zugriffsrechte (Berechtigungen) für weitere Konfigurationen. Änderungen an der Konfiguration sind dann auch durch einen Benutzer Root nicht mehr vornehmbar, erst wieder beim nächsten Systemstart oder Reboot.

Folglich kann eine Konfigurationseinstellung, wie beispielsweise der Aufruf einer Funktion oder einer API (Application Programming Interface) eines Mikrocontroller-basierten Steuergerätes, nach einem Systemstart (Reboot) durch eine auf dem Mikrocontroller ausgeführten Software nur so lange vorgenommen werden, bis eine Versiegelung der Konfigurationseinstellung erfolgt. Insbesondere kann während des Boot-Vorgangs eine Konfiguration von Betriebssystem-Kernels erfolgen. Nach erfolgter Versiegelung ist eine Änderung unter Software-Kontrolle auch durch den Benutzer Root nicht möglich. Eine Änderung ist erst nach erneutem Neustart wieder möglich.

Unter Manipulation kann in diesem Zusammenhang jeder nicht erlaubte Eingriff von außen auf die Software der Recheneinrichtung verstanden werden, der zu nicht gewünschten Änderungen an der Software oder an mit dieser verbundenen Daten führt. Eine Manipulation der Software kann somit auch zu unerwünschten Änderungen der Komponenten (Ausführungsumgebung) der Recheneinrichtung bzw. zu einer Manipulation an dieser führen.

Insbesondere kann hierdurch auch ein Schreibzugriff durch das Entziehen bestimmter Zugriffsrechte auf bestimmte Konfigurationsspeicher, wie EEPROM-Speicher oder Flash-Speicher, unterbunden werden, so dass im laufenden Betrieb ein Überschreiben dieser Speicher unterbunden wird.

Gemäß einer Ausführungsform wird die Vielzahl der Zugriffsrechte durch in einer Speichereinrichtung der Recheneinrichtung ablegbare Flags abgebildet.

Folglich kann auch das Entziehen der Zugriffsrechte und die Verwaltung der unveränderbaren Untermenge der Zugriffsrechte durch diese Flags verwaltet werden. In einer anderen Variante können diese Flags auch in Hardware realisiert sein.

Bei dem vorgeschlagenen Verfahren wird die Recheneinrichtung in einem ersten Betriebsmodus, in welchem die Vielzahl der Zugriffsrechte auf die Komponenten vorhanden (gesetzt) ist, und in einem auf den ersten Betriebsmodus folgenden zweiten Betriebsmodus, in welchem nur die festgelegte Untermenge der Zugriffsrechte auf die Komponenten vorhanden ist, betrieben. Gemäß einer weiteren Ausführungsform ist der erste Betriebsmodus als ein Bootvorgang der Software auf der Recheneinrichtung ausgebildet.

Gemäß einer weiteren Ausführungsform ist zweite Betriebsmodus als ein Normalbetrieb der Recheneinrichtung mit gebooteter Software ausgebildet.

Der Normalbetrieb kann auch als Regelbetrieb bezeichnet werden.

Gemäß einer weiteren Ausführungsform werden der erste Betriebsmodus und der zweite Betriebsmodus durch ein einziges Flag unterschieden.

Beispielsweise kann ein gesetztes Flag den ersten Betriebsmodus anzeigen, wohingegen ein nicht gesetztes Flag den zweiten Betriebsmodus anzeigen kann.

Gemäß einer weiteren Ausführungsform wird eine Speichereinheit zur Speicherung des Flags verwendet, welche während der Ausführung der Software durch einen mittels Software generierten Befehl nur in eine einzige Richtung änderbar ist.

Bei dieser Ausführungsform kann das Flag zwar durch eine Software-Anweisung gesetzt werden, aber nur durch ein Hardware-Reset wieder zurückgesetzt werden. Dies erhöht die Sicherheit und den Integritätsschutz der Recheneinrichtung.

Dabei wird vorzugsweise ein digitales Flip-Flop als die Speichereinheit zum Speichern dieses einzigen Flags verwendet.

Das digitale Flip-Flop stellt eine besonders einfache und preisgünstige Möglichkeit zur Realisierung dieser Speichereinheit dar.

Gemäß einer weiteren Ausführungsform wird die festgelegte Untermenge der Zugriffsrechte als eine Liste oder als eine Matrix in einer Speichereinrichtung der Recheneinrichtung abgelegt.

Die Liste kann beispielsweise eine Whitelist zugelassener Programmdateien bzw. Konfigurationsdateien darstellen. Diese Whitelist kann im Betriebssystem-Kernel konfiguriert und dann auch versiegelt werden. Danach ist eine Modifikation der Whitelist im laufenden Betrieb nicht mehr möglich, auch nicht durch einen Nutzer mit Root-Rechten oder Administratorrechten. Nach erfolgter Versiegelung wird der Boot-Vorgang fortgesetzt oder es werden Anwendungsprogramme gestartet.

Gemäß einer weiteren Ausführungsform wird die Anzahl der Zugriffsrechte auf die Komponenten während des Startvorgangs der Recheneinrichtung bei Eintreten eines vorbestimmten Ereignisses entzogen.

Gemäß einer weiteren Ausführungsform wird die Anzahl der Zugriffsrechte auf die Komponenten während des Startvorgangs der Recheneinrichtung bei Ablauf eines Timers entzogen.

Gemäß einer weiteren Ausführungsform wird die Anzahl der Zugriffsrechte auf die Komponenten während des Startvorgangs der Recheneinrichtung entzogen, wenn ein vorbestimmtes Ereignis eintritt oder wenn ein bestimmter Timer abläuft.

Gemäß einer weiteren Ausführungsform umfassen die zur Ausführung der Software eingerichteten Komponenten zumindest eine Hardware-Komponente, insbesondere eine Netzwerkschnittstelle, eine Eingabe-/Ausgabeeinheit, einen Watchdog, einen Speicher, einen Sensor, einen Aktor oder einen Prozessor, und/oder eine Software-Komponente, insbesondere eine Datei oder einen Prozess.

Gemäß einer weiteren Ausführungsform ist die Recheneinrichtung ein Steuergerät, ein Personalcomputer, eine eingebettete Vorrichtung, ein Server oder ein Steuerrechner.

Gemäß einer weiteren Ausführungsform ist die Software ein Betriebssystem, ein Betriebskernel, ein Kernel-Modul, ein Treiber, ein User-Space-Programm oder eine Laderoutine.

Gemäß einer weiteren Ausführungsform sind die folgenden Schritte vorgesehen:
Erzeugen einer während der Ausführung der Software unveränderbaren Referenz-Information für eine Integritätsprüfung der Recheneinrichtung während des Startens der Recheneinrichtung, nachdem die Untermenge der Zugriffsrechte auf die Komponenten festgelegt ist, und
Durchführen der Integritätsprüfung mittels der erzeugten Referenz-Information.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem weiteren Aspekt wird eine Vorrichtung zum Manipulationsschutz einer Recheneinrichtung, welche eine Vielzahl von zur Ausführung einer Software eingerichteten Komponenten mit zugeordneten Zugriffsrechten umfasst, vorgeschlagen. Die Vorrichtung weist eine erste Einheit und eine zweite Einheit auf. Die erste Einheit ist dazu eingerichtet, eine Anzahl der Zugriffsrechte auf die Komponenten während eines Startvorgangs der Recheneinrichtung zu entziehen (zu sperren). Die zweite Einheit ist dazu eingerichtet, eine während der Ausführung der Software unveränderbare Untermenge der Zugriffsrechte auf die Komponenten basierend auf den entzogenen Zugriffsrechten festzulegen.

Die jeweilige Einheit, zum Beispiel erste oder zweite Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die für das vorgeschlagene Verfahren beschriebenen Ausführungsformen und Merkmale gelten für die vorgeschlagene Vorrichtung entsprechend.

Gemäß einem weiteren Aspekt wird eine Recheneinrichtung vorgeschlagen, welche eine Vielzahl von zur Ausführung einer Software eingerichteten Komponenten mit zugeordneten Zugriffsrechten und eine wie oben erläuterte Vorrichtung zum Manipulationsschutz der Recheneinrichtung aufweist.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein schematisches Ablaufdiagramm eines ersten Ausführungsbeispiels eines Verfahrens zum Manipulationsschutz einer Recheneinrichtung;
Fig. 2 zeigt ein schematisches Ablaufdiagramm eines zweiten Ausführungsbeispiels eines Verfahrens zum Manipulationsschutz einer Recheneinrichtung;
Fig. 3 zeigt ein schematisches Blockschaltbild eines Ausführungsbeispiels einer Vorrichtung zum Manipulationsschutz einer Recheneinrichtung;
Fig. 4 zeigt ein schematisches Blockschaltbild eines Ausführungsbeispiels einer Recheneinrichtung;
Fig. 5 zeigt ein schematisches Ablaufdiagramm eines dritten Ausführungsbeispiels eines Verfahrens zum Manipulationsschutz einer Recheneinrichtung;
Fig. 6 zeigt ein schematisches Ablaufdiagramm eines vierten Ausführungsbeispiels eines Verfahrens zum Manipulationsschutz einer Recheneinrichtung; und
Fig. 7 zeigt ein schematisches Ablaufdiagramm eines fünften Ausführungsbeispiels eines Verfahrens zum Manipulationsschutz einer Recheneinrichtung.

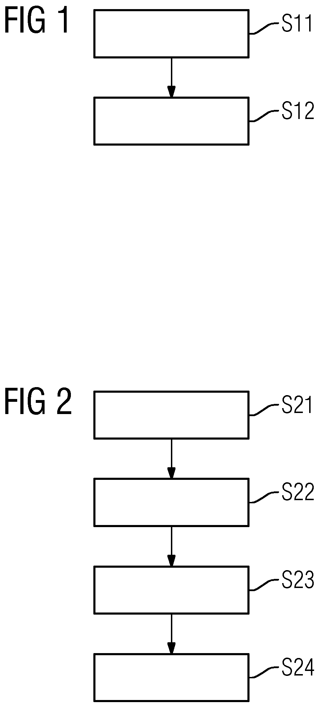

In Fig. 1 ist ein schematisches Ablaufdiagramm eines ersten Ausführungsbeispiels eines Verfahrens zum Manipulationsschutz einer Recheneinrichtung dargestellt.

Die Recheneinrichtung umfasst eine Vielzahl von zur Ausführung einer Software eingerichteten Komponenten mit zugeordneten Zugriffsrechten. Ein einer Komponente zugeordnetes Zugriffsrecht gibt die Erlaubnis an, auf die Komponente zuzugreifen. Fehlt hingegen das der Komponente zugeordnete Zugriffsrecht, d.h. das Zugriffsrecht ist nicht erteilt, so kann auf die Komponente nicht zugegriffen werden.

Die Zugriffsrechte können durch Flags verwaltet werden. Die Flags werden beispielsweise in einer Speichereinrichtung der Recheneinrichtung hinterlegt. Die zur Ausführung der Software eingerichteten Komponenten der Recheneinrichtung können Hardware-Komponenten und/oder Software-Komponenten umfassen. Beispiele für Hardware-Komponenten sind Netzwerkschnittstellen, Eingabe-/Ausgabeeinheiten, Watchdogs, Speicher, Sensoren, Aktuatoren oder Prozessoren. Die Software-Komponenten können Dateien oder Prozesse umfassen.

Die Recheneinrichtung ist beispielsweise ein Steuergerät, ein Steuersystem, ein eingebettetes Steuergerät, ein Personal Computer, eine eingebettete Vorrichtung, ein Server oder ein Steuerrechner. Die Recheneinrichtung umfasst beispielsweise einen Mikrocontroller oder einen Mikroprozessor. Die Software ist beispielsweise ein Betriebssystem, ein Betriebs-Kernel, ein Kernelmodul, ein Treiber, ein User-Space-Programm oder eine Lageroutine.

Das Verfahren der Fig. 1 umfasst die folgenden Schritte S11 und S12.

In Schritt S11 wird eine Anzahl der Zugriffsrechte auf die Komponenten während eines Startvorgangs der Recheneinrichtung entzogen. Wenn beispielsweise N die Vielzahl der Zugriffsrechte bezeichnet und M die Anzahl der entzogenen Zugriffsrechte bezeichnet, so gilt 1 ≤ M < N.

In Schritt S12 wird eine während der Ausführung der Software unveränderbare Untermenge X der Zugriffsrechte auf die Komponenten basierend auf den entzogenen Zugriffsrechten festgelegt (X = N - M) .

Folglich wird die Recheneinrichtung vorzugsweise in einem ersten Betriebsmodus, in welchem die Vielzahl der Zugriffsrechte auf die Komponenten vorhanden (gesetzt) ist, und in einem auf den ersten Betriebsmodus folgenden zweiten Betriebsmodus, in welchem nur die festgelegte Untermenge der Zugriffsrechte auf die Komponenten vorhanden ist, betrieben. Der erste Betriebsmodus ist beispielsweise ein Boot-Vorgang der Software, wobei der zweite Betriebsmodus dann ein Normalbetrieb oder Regelbetrieb der Recheneinrichtung ist. Beispielsweise werden der erste Betriebsmodus und der zweite Betriebsmodus durch ein einziges Flag differenziert.

Insbesondere wird zur Speicherung des Flags eine Speichereinheit verwendet, welche während der Ausführung der Software durch einen mittels Software generierten Befehl nur in eine einzige Richtung veränderbar ist. Damit kann dieses Flag durch eine Software-Anweisung gesetzt werden, aber nur durch ein Hardware-Reset wieder zurückgesetzt werden. Ein Beispiel für eine solche Speichereinheit ist ein digitales Flip-Flop. Das Flag kann auch als Versiegelungs-Flag bezeichnet werden.

Beispielsweise wird die festgelegte Untermenge der Zugriffsrechte als eine Liste oder als eine Matrix verwaltet. Die Anzahl der Zugriffsrechte auf die Komponenten wird während des Startvorgangs der Recheneinrichtung bei Eintreten eines vorbestimmten Ereignisses (ereignisgetriggert) und/oder bei Ablauf eines Timers (zeitgetriggert) entzogen. Folglich kann die Versiegelung der Konfigurationseinstellung durch eine Software-Anweisung (ereignisgetriggert) erfolgen oder automatisch zeitgesteuert, zum Beispiel nach einer Minute oder fünf Minuten. Der Timer wird vorzugsweise bei einem Reset oder einem Systemstart gesetzt. Nach Ablauf einer vorgebbaren Zeitdauer ab einem Reset oder einem Systemstart erfolgt somit automatisch eine Versiegelung. Insbesondere kann die Speichereinheit den Timer aufweisen, der das Flag der Speichereinheit nach Ablauf der vorgebbaren Zeitdauer seit einem Hardware-Reset automatisch setzt.

Die zeitgesteuerte Variante kann als Rückfallvariante ausgebildet sein und hat den Vorteil, dass unabhängig von der ausgeführten Software automatisch ein Versiegeln erfolgt, also auch ohne dass die ausgeführte Software explizit eine Versiegelung veranlasst.

Fig. 2 zeigt ein schematisches Ablaufdiagramm eines zweiten Ausführungsbeispiels eines Verfahrens zum Manipulationsschutz einer Recheneinrichtung. Die Recheneinrichtung, die Software und die Komponenten können die wie zu Fig. 1 beschriebenen Eigenschaften und Merkmale aufweisen.

Das Verfahren der Fig. 2 umfasst die Schritte S21 bis S24.

In Schritt S21 wird eine Referenz-Information für eine Integritätsprüfung der Recheneinrichtung während des Startens der Recheneinrichtung erzeugt und gespeichert. Diese Referenz-Information soll während der späteren Ausführung der Integritätsprüfung unveränderbar sein.

In Schritt S22 wird eine Anzahl der Zugriffsrechte auf die Komponenten während des Startvorgangs der Recheneinrichtung entzogen. Es erfolgt also eine Versiegelung. Hierbei wird speziell ein Schreibzugriff auf die in Schritt S21 gespeicherte Referenzinformation gesperrt. Dazu kann durch eine Software-Anweisung das Versiegelungs-Flag gesetzt werden.

In Schritt S23 wird eine während der Ausführung der Software unveränderbare Untermenge der Zugriffsrechte auf die Komponenten basierend auf den entzogenen Zugriffsrechten festgelegt.

In Schritt S24 wird eine Integritätsprüfung mittels der erzeugten Referenz-Information durchgeführt. Die Schritte S23 und S24 können auch in umgekehrter Reihenfolge oder gleichzeitig durchgeführt werden.

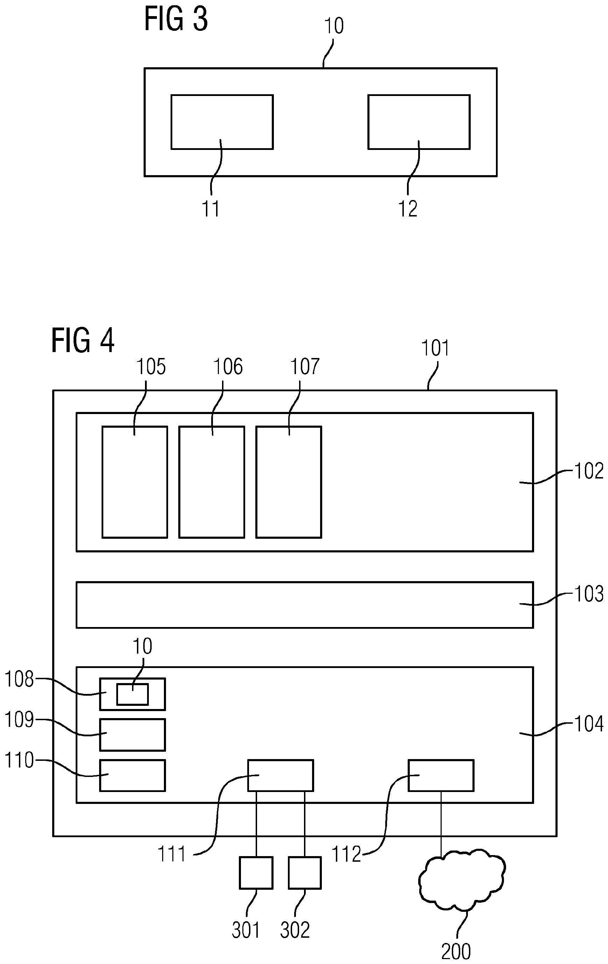

In Fig. 3 ist ein schematisches Blockschaltbild eines Ausführungsbeispiels einer Vorrichtung 10 zum Manipulationsschutz einer Recheneinrichtung 101 dargestellt. Die Recheneinrichtung 101 kann die Eigenschaften und Merkmale wie zu Fig. 1 beschrieben umfassen. Ein Beispiel dieser Recheneinrichtung 101 ist in Fig. 4 gezeigt.

Die Vorrichtung 10 der Fig. 3 umfasst eine erste Einheit 11 und eine zweite Einheit 12.

Die erste Einheit 11 ist dazu eingerichtet, eine Anzahl der Zugriffsrechte auf die Komponenten während eines Startvorgangs der Recheneinrichtung 101 zu entziehen.

Die zweite Einheit 12 ist dazu eingerichtet, eine während der Ausführung der Software unveränderbare Untermenge der Zugriffsrechte auf die Komponenten basierend auf den mittels der ersten Einheit 11 entzogenen Zugriffsrechten festzulegen.

Fig. 4 zeigt ein schematisches Blockschaltbild eines Ausführungsbeispiels einer Recheneinrichtung 101. Die Recheneinrichtung 101 kann ein eingebettetes Steuergerät sein. Das Steuergerät 101 umfasst einen Anwendungsbereich 102 (User Mode, Applications), einen Betriebssystembereich 103 (Kernel Mode, Operating System) und Hardware 104.

Der Anwendungsbereich 102 kann verschiedene Applikationen 105, 106 und 107 beinhalten. Die Hardware 104 umfasst eine CPU 108, verschiedene Speicher 109, 110, wie beispielsweise einen RAM-Speicher 109 und einen Flash-Speicher 110, eine Eingabe-/Ausgabeeinheit 111 und eine Netzwerkschnittstelle 112 (CNI Communication Network Interface). Die CPU 108 umfasst die Vorrichtung 10 nach Fig. 3. Über die Eingabe-/Ausgabeeinheit 111 sind S/A-Module 101, 103 koppelbar. Die Netzwerkschnittstelle 112 ist dazu eingerichtet, die Recheneinrichtung 101 mit einem Netzwerk 200, beispielsweise einem LAN (Local Area Network), zu koppeln.

Auf der Hardware 104 wird das Betriebssystem 103 ausgeführt, zum Beispiel als Embedded Linux. Der Betriebssystem-Kernel wird im Kernel Mode 103 ausgeführt. Der Kernel 103 kann beliebige Operationen aufrufen, d.h. es ist innerhalb des Betriebssystem-Kernels keine Zugriffskontrolle vorgesehen. Durch den Kernel 103 werden die Applikationen 105 bis 107 als Prozesse ausgeführt. Einem Prozess ist ein (System-)Nutzer zugeordnet (z.B. als Root, User, Control). Abhängig davon werden einem Prozess Berechtigungen (Zugriffsrechte) zugeordnet. Ein Prozess kann nur Betriebssystemfunktionen aufrufen, soweit die erforderliche Berechtigung vorliegt. Das Betriebssystem 103 wird beim Startvorgang von einem Boot Loader geladen. Es sind auch mehrstufige Boot-Konzepte realisierbar. Zum Beispiel kann ein Initial Boot Loader einen Second-Stage Boot Loader aus dem Flash-Speicher laden und ausführen. Dieser Boot Loader lädt das Betriebssystem-Image aus dem Flash-Speicher 110 und führt ihn aus. Dieser Boot Loader lädt das Betriebssystem-Image aus dem Flash-Speicher 110 in den RAM-Speicher 109 und übergibt die Ausführungskontrolle. Das Betriebssystem 103 startet am Anfang mit der Ausführung von Boot-Skripten. Dabei werden z.B. Kernel-Module in den Betriebssystem-Kernel geladen. Es wird Hardware 104 konfiguriert. Ferner werden Systemprozesse gestartet. Am Ende des Boot-Vorgangs werden die Anwendungsprogramme 105 - 107 gestartet.

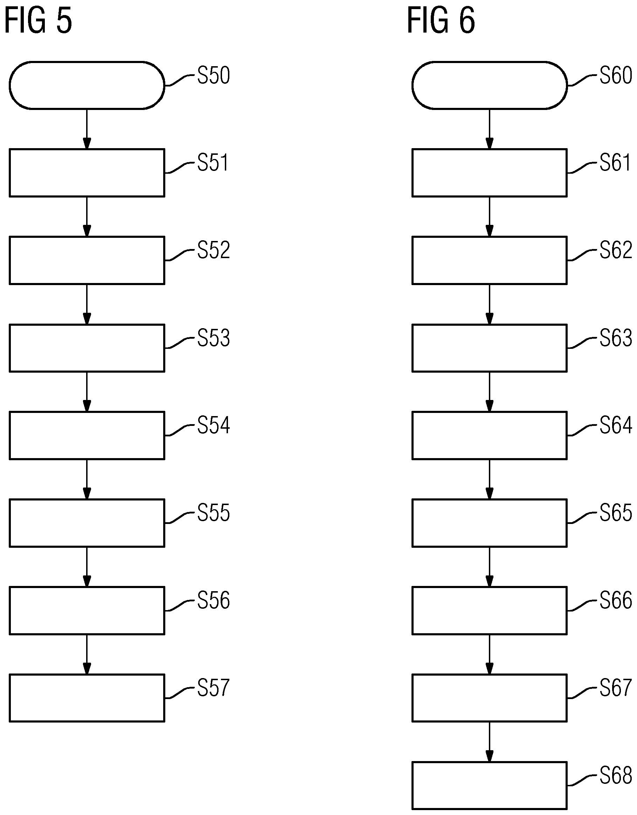

Die Figuren 5 bis 7 zeigen drei Varianten, wie eine Versiegelung in den Boot-Prozess integriert werden kann. So zeigt die Fig. 5 die folgende Abfolge der Verfahrensschritte S50 - S57:
- S50:: Reset;
- S51:: erste Stufe des Boot Loaders;
- S52:: zweite Stufe des Boot Loaders;
- S53:: OS Boot Loader;
- S54:: OS Kernel;
- S55:: Startup Scripts;
- S56:: Versiegelung der Kernel-Konfiguration;
- S57:: Start der Applikation(en)

Des Weiteren zeigt die Fig. 6 die folgende Abfolge der Verfahrensschritte S60 - S68:
- S60:: Reset;
- S61:: erste Stufe des Boot Loaders;
- S62:: zweite Stufe des Boot Loaders;
- S63:: OS Boot Loader;
- S64:: OS Kernel;
- S65:: Startup Scripts (1. Teil);
- S66:: Versiegelung der Kernel-Konfiguration;
- S67:: Startup Scripts (2. Teil);
- S68:: Start der Applikation(en)

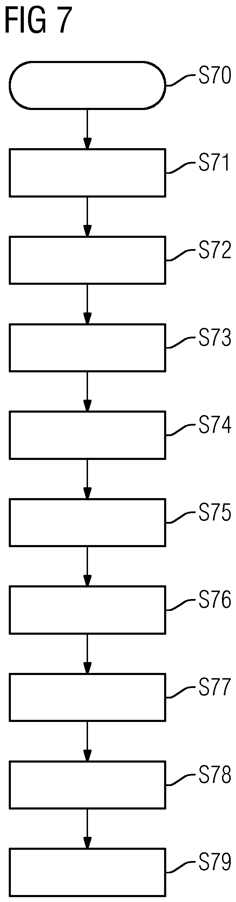

Ferner zeigt die Fig. 7 die folgende Abfolge der Verfahrensschritte S70 - S79:
- S70:: Reset;
- S71:: erste Stufe des Boot Loaders;
- S72:: zweite Stufe des Boot Loaders;
- S73:: OS Boot Loader;
- S74:: OS Kernel;
- S75:: Startup Scripts (1. Teil);
- S76:: Versiegelung der Kernel-Konfiguration;
- S77:: Startup Scripts (2. Teil);
- S78:: Versiegelung von Referenz-Information für Integritätsprüfung
- S79:: Start der Applikation(en)

Eine Versiegelung kann beispielsweise nach Abschluss der Startup-Skripte (siehe z.B. Schritt S55) oder nach Abschluss eines ersten Teils der Startup-Skripte (siehe beispielsweise Schritt S66) erfolgen. Es ist auch möglich, mehrere Versiegelungen vorzusehen (siehe Schritte S76 und S78), die eine unterschiedliche oder zumindest teilweise unterschiedliche Funktionalität betreffen. So kann z.B. eine Referenz-Information für eine Integritätsprüfung der Recheneinrichtung versiegelt werden (siehe Schritt S78), bevor der reguläre Betriebsmodus des Steuergerätes 101 aufgenommen wird.

In den Figuren sind gleiche oder funktionsgleiche Elemente mit denselben Bezugszeichen versehen worden, sofern nichts anderes angegeben ist.

Obwohl die vorliegende Erfindung anhand von Ausführungsbeispielen beschrieben wurde, ist sie vielfältig modifizierbar.

## Patentansprüche

1. Verfahren zum Manipulationsschutz einer Recheneinrichtung (101), welche eine Vielzahl von zur Ausführung einer Software eingerichteten Komponenten (105-112) mit zugeordneten Zugriffsrechten umfasst, mit:
Entziehen (S11, S22) einer Anzahl der Zugriffsrechte auf die Komponenten (105-112) während eines Startvorgangs der Recheneinrichtung (101), und
Festlegen (S12, S23) einer während der Ausführung der Software unveränderbaren Untermenge der Zugriffsrechte auf die Komponenten (105-112) basierend auf den entzogenen Zugriffsrechten,
wobei die Recheneinrichtung (101) in einem ersten Betriebsmodus, in welchem die Vielzahl der Zugriffsrechte auf die Komponenten (105-112) vorhanden ist, und in einem auf den ersten Betriebsmodus folgenden zweiten Betriebsmodus, in welchem nur die festgelegte Untermenge der Zugriffsrechte auf die Komponenten (105-112) vorhanden ist, betrieben wird.

2. Verfahren nach Anspruch 1,
**dadurch gekennzeichnet,**
**dass** die Vielzahl der Zugriffsrechte durch in einer Speichereinrichtung (110) der Recheneinrichtung (101) ablegbare Flags abgebildet wird.

3. Verfahren nach Anspruch 1,
**dadurch gekennzeichnet,**
**dass** der erste Betriebsmodus als ein Bootvorgang der Software und der zweite Betriebsmodus als ein Normalbetrieb der Recheneinrichtung (101) ausgebildet sind.

4. Verfahren nach Anspruch 1 oder 3,
**dadurch gekennzeichnet,**
**dass** der erste Betriebsmodus und der zweite Betriebsmodus durch ein einziges Flag unterschieden werden.

5. Verfahren nach Anspruch 4,
**dadurch gekennzeichnet,**
**dass** eine Speichereinheit zur Speicherung des Flags verwendet wird, welche während der Ausführung der Software durch einen mittels Software generierten Befehl nur in eine einzige Richtung änderbar ist.

6. Verfahren nach Anspruch 5,
**dadurch gekennzeichnet,**
**dass** ein digitales Flip-Flop als die Speichereinheit zum Speichern des Flags verwendet wird.

7. Verfahren nach einem der Ansprüche 1 bis 6,
**dadurch gekennzeichnet,**
**dass** die festgelegte Untermenge der Zugriffsrechte als eine Liste oder als eine Matrix in einer Speichereinrichtung (110) der Recheneinrichtung (101) abgelegt wird.

8. Verfahren nach einem der Ansprüche 1 bis 7,
**dadurch gekennzeichnet,**
**dass** die Anzahl der Zugriffsrechte auf die Komponenten während des Startvorgangs der Recheneinrichtung (101) bei Eintreten eines vorbestimmten Ereignisses und/oder bei Ablauf eines Timers entzogen werden.

9. Verfahren nach einem der Ansprüche 1 bis 8,
**dadurch gekennzeichnet,**
**dass** die zur Ausführung der Software eingerichteten Komponenten (105-112) zumindest eine Hardware-Komponente, insbesondere eine Netzwerkschnittstelle (112), eine Eingabe-/Ausgabeeinheit (111), einen Watchdog, einen Speicher (109, 110), einen Sensor, einen Aktor oder einen Prozessor, und/oder eine Software-Komponente (102, 103), insbesondere eine Datei oder einen Prozess, umfassen.

10. Verfahren nach einem der Ansprüche 1 bis 9,
**dadurch gekennzeichnet,**
**dass** die Recheneinrichtung (101) ein Steuergerät, ein Personalcomputer, eine eingebettete Vorrichtung, ein Server oder ein Steuerrechner ist.

11. Verfahren nach einem der Ansprüche 1 bis 10,
**dadurch gekennzeichnet,**
**dass** die Software ein Betriebssystem, ein Betriebskernel, ein Kernel-Modul, ein Treiber, ein User-Space-Programm oder eine Laderoutine ist.

12. Verfahren nach einem der Ansprüche 1 bis 11, **gekennzeichnet durch**:
Erzeugen (S21) einer während der Ausführung der Software unveränderbaren Referenz-Information für eine Integritätsprüfung der Recheneinrichtung (101) während des Startens der Recheneinrichtung (101), nachdem die Untermenge der Zugriffsrechte auf die Komponenten festgelegt ist, und
Durchführen (S24) der Integritätsprüfung mittels der erzeugten Referenz-Information.

13. Computerprogrammprodukt, welches auf einer programmgesteuerten Einrichtung die Durchführung eines Verfahrens nach einem der Ansprüche 1 bis 12 veranlasst.

14. Vorrichtung (10) zum Manipulationsschutz einer Recheneinrichtung (101), welche eine Vielzahl von zur Ausführung einer Software eingerichteten Komponenten (105-112) mit zugeordneten Zugriffsrechten umfasst, mit:
einer ersten Einheit (11) zum Entziehen einer Anzahl der Zugriffsrechte auf die Komponenten (105-112) während eines Startvorgangs der Recheneinrichtung (101), und
einer zweiten Einheit (12) zum Festlegen einer während der Ausführung der Software unveränderbaren Untermenge der Zugriffsrechte auf die Komponenten (105-112) basierend auf den entzogenen Zugriffsrechten
wobei die Recheneinrichtung (101) in einem ersten Betriebsmodus, in welchem die Vielzahl der Zugriffsrechte auf die Komponenten (105-112) vorhanden ist, und in einem auf den ersten Betriebsmodus folgenden zweiten Betriebsmodus, in welchem nur die festgelegte Untermenge der Zugriffsrechte auf die Komponenten (105-112) vorhanden ist, betrieben wird.

## Claims

1. Method for protecting a computing apparatus (101) against manipulation, which includes a plurality of components (105 to 112) configured for executing software and having associated access rights, including:
revoking (S11, S22) a number of the access rights to the components (105 to 112) during a start process of the computing apparatus (101), and
determining (S12, S23) a subset of the access rights to the components (105 to 112), which is invariable during the execution of the software, based on the revoked access rights,
wherein the computing apparatus (101) is operated in a first operating mode in which the plurality of the access rights to the components (105 to 112) exists, and in a second operating mode following the first operating mode in which only the ascertained subset of the access rights to the components (105 to 112) exists.

2. Method according to Claim 1,
**characterized in that**
the plurality of the access rights is mapped via flags which may be stored in a memory device (110) of the computing apparatus (101).

3. Method according to Claim 1,
**characterized in that**
the first operating mode is designed as a boot process of the software and the second operating mode is designed as a normal operation of the computing apparatus (101).

4. Method according to Claim 1 or 3,
**characterized in that**
the first operating mode and the second operating mode are differentiated via a single flag.

5. Method according to Claim 4,
**characterized in that**
for storing the flag, a memory unit is used which is modifiable only in a single direction during the execution of the software via a command generated by means of software.

6. Method according to Claim 5,
**characterized in that**
a digital flip-flop is used as the memory unit for storing the flag.

7. Method according to one of Claims 1 to 6,
**characterized in that**
the ascertained subset of the access rights is stored as a list or as a matrix in a memory device (110) of the computing apparatus (101).

8. Method according to one of Claims 1 to 7,
**characterized in that**
the number of access rights to the components is revoked during the start process of the computing apparatus (101) in the case of the occurrence of a predetermined event and/or if a timer expires.

9. Method according to one of Claims 1 to 8,
**characterized in that**
the components (105 to 112) configured for the execution of the software include at least one hardware component, in particular a network interface (112), an input/output unit (111), a watchdog, a memory (109, 110), a sensor, an actuator or a processor, and/or a software component (102, 103), in particular a file or a process.

10. Method according to one of Claims 1 to 9,
**characterized in that**
the computing apparatus (101) is a control device, a personal computer, an embedded device, a server, or a control computer.

11. Method according to one of Claims 1 to 10,
**characterized in that**
the software is an operating system, an operating kernel, a kernel module, a driver, a user-space program, or a loading routine.

12. Method according to one of Claims 1 to 11,
**characterized by**:
generating (S21) a piece of reference information, which is invariable during the execution of the software, for an integrity check of the computing apparatus (101) during the start of the computing apparatus (101), according to which the subset of the access rights to the components is determined, and
carrying out (S24) the integrity check by means of the generated piece of reference information.

13. Computer program product which initiates the execution of a method according to one of Claims 1 to 12 on a program-controlled apparatus.

14. Device (10) for protecting a computing apparatus (101) against manipulation, which includes a plurality of components (105 to 112) configured for executing software and having associated access rights, including:
a first unit (11) for revoking a number of the access rights to the components (105 to 112) during a start process of the computing apparatus (101), and
a second unit (12) for determining a subset of the access rights to the components (105 to 112), which is invariable during the execution of the software, based on the revoked access rights, wherein the computing apparatus (101) is operated in a first operating mode in which the plurality of the access rights to the components (105 to 112) exists, and in a second operating mode following the first operating mode in which only the ascertained subset of the access rights to the components (105 to 112) exists.

## Revendications

1. Procédé de protection d'un dispositif de calcul (101) contre les manipulations, lequel dispositif comprend une pluralité de composants (105-112) configurés pour exécuter un logiciel et comportant des droits d'accès associés, incluant :
- le retrait (S11, S22) d'un nombre de droits d'accès aux composants (105-112) pendant une opération de démarrage du dispositif de calcul (101) et
- la détermination (S12, S23) d'un sous-ensemble des droits d'accès aux composants (105-112) invariable pendant l'exécution du logiciel sur la base des droits d'accès retirés,
le dispositif de calcul (101) fonctionnant dans un premier mode opérationnel dans lequel on a la pluralité de droits d'accès aux composants (105-112) et dans un deuxième mode opérationnel qui fait suite au premier mode opérationnel et dans lequel on n'a que le sous-ensemble déterminé de droits d'accès aux composants (105-112).

2. Procédé selon la revendication 1, **caractérisé en ce que** la pluralité de droits d'accès est représentée par des indicateurs pouvant être déposés dans un dispositif de mémoire (110) du dispositif de calcul (101).

3. Procédé selon la revendication 1, **caractérisé en ce que** le premier mode opérationnel est réalisé en tant qu'opération de démarrage du logiciel et **en ce que** le deuxième mode opérationnel est réalisé en tant que fonctionnement normal du dispositif de calcul (101).

4. Procédé selon la revendication 1 ou 3, **caractérisé en ce que** le premier mode opérationnel et le deuxième mode opérationnel se distinguent par un seul indicateur.

5. Procédé selon la revendication 4, **caractérisé en ce qu'**on utilise une unité de mémoire pour sauvegarder l'indicateur, laquelle unité ne peut être modifiée que dans un sens pendant l'exécution du logiciel par un ordre généré au moyen du logiciel.

6. Procédé selon la revendication 5, **caractérisé en ce qu'**une bascule numérique est utilisée en tant qu'unité de mémoire pour sauvegarder l'indicateur.

7. Procédé selon l'une des revendications 1 à 6, **caractérisé en ce que** le sous-ensemble déterminé des droits d'accès est déposé en tant que liste ou matrice dans un dispositif de mémoire (110) du dispositif de calcul (101).

8. Procédé selon l'une des revendications 1 à 7, **caractérisé en ce que** le nombre de droits d'accès aux composants est retiré, pendant l'opération de démarrage du dispositif de calcul (101), à la survenance d'un événement prédéfini et/ou à l'expiration d'un temporisateur.

9. Procédé selon l'une des revendications 1 à 8, **caractérisé en ce que** les composants (105-112) configurés pour exécuter le logiciel comprennent au moins un composant hardware, en particulier une interface réseau (112), une unité d'entrée / sortie (111), un organe de contrôle, une mémoire (109, 110), un capteur, un actionneur ou un processeur et/ou un composant logiciel (102, 103), en particulier un fichier ou un processus.

10. Procédé selon l'une des revendications 1 à 9, **caractérisé en ce que** le dispositif de calcul (101) est un appareil de commande, un ordinateur personnel, un dispositif intégré, un serveur ou un ordinateur de commande.

11. Procédé selon l'une des revendications 1 à 10, **caractérisé en ce que** le logiciel est un système d'exploitation, un noyau d'exploitation, un module noyau, un driver, un programme d'espace utilisateur ou une routine de chargement.

12. Procédé selon l'une des revendications 1 à 11, **caractérisé par** :
- la génération (S21) d'une information de référence invariable pendant l'exécution du logiciel pour un contrôle d'intégrité du dispositif de calcul (101) pendant le démarrage du dispositif de calcul (101) après la détermination du sous-ensemble de droits d'accès aux composants et
- l'exécution (S24) du contrôle d'intégrité au moyen de l'information de référence générée.

13. Produit de programme informatique qui fait exécuter un procédé selon l'une des revendications 1 à 12 sur un dispositif commandé par programme.

14. Dispositif (10) de protection d'un dispositif de calcul (101) contre les manipulations, lequel comprend une pluralité de composants (105-112) configurés pour exécuter un logiciel et comportant des droits d'accès associés, incluant :
- une première unité (11) pour retirer un nombre de droits d'accès aux composants (105-112) pendant une opération de démarrage du dispositif de calcul (101) et
- une deuxième unité (12) pour déterminer un sous-ensemble des droits d'accès aux composants (105-112) invariable pendant l'exécution du logiciel sur la base des droits d'accès retirés,
le dispositif de calcul (101) fonctionnant dans un premier mode opérationnel dans lequel on a la pluralité de droits d'accès aux composants (105-112) et dans un deuxième mode opérationnel qui fait suite au premier mode opérationnel et dans lequel on n'a que le sous-ensemble déterminé de droits d'accès aux composants (105-112).
